# EUROPEAN PATENT SPECIFICATION

(11) **EP 1 536 876 B1**
(45) Date of publication and mention of the grant of the patent: **01.04.2009**
(21) Application number: 03762384.0
(22) Date of filing: 02.07.2003
(51) Int. Cl.: B01D 36/00, B01D 36/04, B07B 7/06

(54) **POLLEN CLEANING METHOD AND A DEVICE APPLYING THIS METHOD**
POLLENREINIGUNGSVERFAHREN UND DIESES VERFAHREN VERWENDENDE VORRICHTUNG
PROCEDE DE NETTOYAGE DU POLLEN ET DISPOSITIF DE MISE EN OEUVRE DUDIT PROCEDE

(30) Priority: 03.07.2002 CZ 20022325
(43) Date of publication of application: 08.06.2005
(73) Proprietor: Tomek, Jiri, 370 05 Ceské Budejovice (CZ)
(72) Inventor: Tomek, Jiri, 370 05 Ceské Budejovice (CZ)
(74) Representative: Sedlák, Jirí
(86) International application number: PCT/CZ2003/000036
(87) International publication number: WO 2004/004866

(56) References cited:
- US-A- 4 746 071

## Description

### Background and summary of the invention

The invention deals with a method of cleaning pollen used as raw material for manufacturing medicines, and a device for applying this method.

Pollen as raw material for manufacturing medicines is gained from gathered blossoms and other parts of plants, which are dried to required moisture, cleaned from rough impurities like pieces of leaves, twigs, grass etc., and the basic raw material is then cleaned from tiny impurities like soot, dust, spores and micro-organisms and other pathological elements undesirable for medical raw material.

The most widespread method and device for cleaning pollen known so far is represented by cleaning on mechanical shaking machines consisting of a system of screens with various mesh diameters arranged one over another, vibrating by means of a motor with an eccentric cam. The pollen falls through the upper sieve with the biggest mesh diameter gradually to the lowest sieve with the smallest mesh diameter, and the dirt is caught on the sieves. The disadvantage of this system is that it is not able to clean the pollen sufficiently, especially from tiny ingredients like spores and micro-organisms, which fall together with the pollen grains the diameter of which is the same or even smaller than that of the pollen grains, so they fall even through the fines sieves. The final biological purity of the pollen then reaches to the maximum of 90% to 95% of pollen particles, while 5% - 10% are impurities. This system is not able to clean strongly contaminated pollen containing more than 30% of dirt as the sieves get jammed. Large amount of waste after cleaning is another disadvantage.

Another device for cleaning pollen from mechanical particles, spores and micro-organisms is known from the WO 03/041840. It is based on a sucking unit consisting of a vacuum cleaner with a paper filtering bag inside the cloth dust bag, to which an adapter with a conical separator made of plastic (insulant) is led, and the sucking pipe through which the contaminated pollen comes is led tangentially to the part of the separator with the largest diameter. The pure pollen particles fall through the separator into the filter and the contaminants rotate in the electrostatic field on the separator conical part.

The above device and method is pointlessly time consuming for some kinds of pollen, and a simpler cleaning method and device would be sufficient for their cleaning. Searching for the method and device is the subject of this invention

The determined aim is reached by the pollen cleaning method and the device for its application according to claims 1 and 3 respectively. It is based on the principle that the contaminated pollen is sucked to flowing air through a sieve made of electrically nonconducting material (insulant), advantageously of plastic. Electrostatic field appears on the sieve as a result of friction when the contaminated pollen moves on the sieve. The pure pollen particles, which are non-conductive, fall through the filter where they are caught for further processing. The contaminants stick on the sieve, first because the big contaminant particles cannot get through the sieve and secondly because the small contaminant particles are able to get the electrostatic field charge and stick in that on the sieve surface, from where they are later removed as waste.

To ensure even spreading and optimize passing of the pollen through the sieve, the pass is conveniently regulated by a throttle flap located before the sieve and regulating the air flow to the sucking strainer. The flap enables regulation of current speed of the amount of sucked contaminated pollen as well as the sucking speed according to the sucking power, pollen type, sieve and the amount of the contaminated pollen on the sieve.

A pollen cleaning device applying the above cleaning method also forms the subject of the invention. It consists of the known sucking unit fitted with a filter catching the pure pollen, and its principle is based on the fact that at least one sieve made of insulant is arranged before the inlet of the filter and at least one throttle flap enabling regulation of sucked air and pollen. As the pollen material is very fine and the processing runs in the amount of a few grams, suitable laboratory conditions have to be insured for the operation. From this point of view placing of the whole device according to the invention inside an low-pressure chamber looks advantageous. The chamber is fitted with a low-pressure ventilator the outlet of which as well as the outlet of the sucking unit are led outside the chamber.

The sieve is interchangeable and is fitted in horizontal position on the input of the vertical sucking strainer, which leads to the filter. The throttle flap is advantageously made of a perforated plate of any shape adjacent to the sieve. For the optimum sucking regulation there are circular or oval holes of various diameter made in the flap, located on the perimeter of an imaginary circle or oval on the plate. After applying the contaminated pollen on the sieve you just put the flap on the sieve and regulate sucking by slight tilting of the flap from side to side so as the pollen does not jam in the sieve at one point and passes through the sieve regularly.

A heating board warming the work board on which the contaminated pollen is located belongs to practical accessories of the device according to the invention. For proper cleaning the pollen must not be wet, so it is advantageous to adjust its moisture by drying on a heated work board. A sweeping plate serves for spreading the pollen on the work board. A spoon serves for putting the contaminated pollen on the sieve and a brush is used for removing the dirt particles from the sieve to the waste bin.

A cover with suction lead is an additional accessory. Fitted on the suction strainer it enables you to suck the remaining contaminated pollen, which cannot be taken from the work board with the spoon.

The advantage of the method of pollen cleaning according to the invention is based on its simplicity, high speed and high efficiency especially in removing mechanical particles. For some kinds of pollen just one cleaning process is sufficient to reach the required purity, for other kinds the whole process may be repeated, i.e. the clean pollen may be cleaned again to reach the required purity level.

### Brief description of the drawings

The invention will be explained in more detail on drawings of which Fig. 1 shows a view of the device in the low-pressure chamber with vertical cross section through the sucking unit with the sucking strainer, Fig. 2 shows a detailed axonometric view of the sucking strainer with the sieve and the throttle flap, Fig. 3 shows detailed axonometric view of the sucking strainer with the sieve and the cover with the sucking lead, Figures 4 through 8 show phases of cleaning the pollen using the throttle flap on the sieve on the sucking strainer in cross section.

### Detailed description of the preferred embodiments

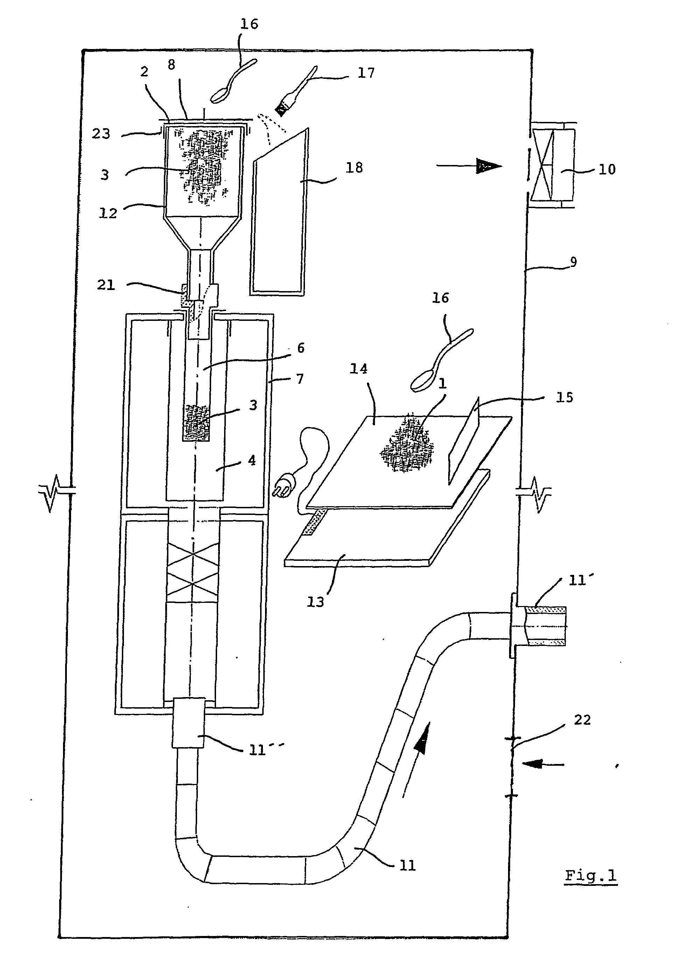

The pollen cleaning device according to the invention is according to the example presented on Fig. 1 arranged in a low-pressure chamber 9, where the operator also works. The chamber prevents dust, mechanical and biological contaminants from ingress to the cleaning area, and the low-pressure ventilator 10 maintains permanent slight underpressure inside, while the outside air is sucked in through a filtering vent 22. The sucking unit 7 comprising of a common home vacuum cleaner with approx. power of 500 W arranged to vertical position is inside the low-pressure chamber 9. The outlet 11 from the sucking unit 7 made of a flexible hose is led outside the low-pressure chamber 9 through a bushing 11'. The terminal 11" is removed from the sucking unit 7 and closed when the device is not operated. A filter 6 consisting of a collecting bag of filtering paper, in which pure pollen 3 is caught is inside the sucking unit 7 in a protective textile bag 4. The filter 6 is placed in the sucking mouth of the sucking unit 7 and fixed with an adapter 21, to which the sucking strainer 12 is led. The sucking strainer 12 made advantageously of plastic is arranged vertically and consists of two cylindrical parts of different diameter connected with a conical connecting link. A polyamide sieve 2 is fitted to the mouth of the wider upper cylindrical part of the sucking strainer 12. The sieve 2 may have circular or other shape and is interchangeable so as sieves 2 with required mesh diameter can be used for different types of pollen. In this particular instance a circular sieve 2 is used, with a rim, over which a securing ring 23 or a rubber ring is overlaid after fitting on the suction strainer 12.

A throttle flap 8 is adjacent to the sieve 2. The flap 8 is a perforated square board (it may have completely different shape in different versions) of plexiglas (different material may be used as well). There are different holes 24 of diameters 4, 6 and 8 mm in the throttle flap 8, arranged in circle so as their outer perimeter does not extend the perimeter of the sucking strainer 12.

The pollen cleaning device according to the invention then includes an electric heating board 13 enabling at least two warming modes or stepless regulation, and a work board 14 of stainless steel sheet lying on the heating board 13. Both the boards 13 and 14 are placed on a table or a stall next to which the operator sits and arranges, spreads and heaps the contaminated pollen 1 on the work board 14 with a sweeping plate 15, which ma be made of metal, plexiglas or plastic, he/she ladles the pollen with a spoon 16 and puts it on the sieve 2. The spoon 16 may be metallic or plastic with shovel shape at the front. A waste bin 18 serves for removing the dirt 5 from the sieve 2 surface by means of a horsehair brush 17.

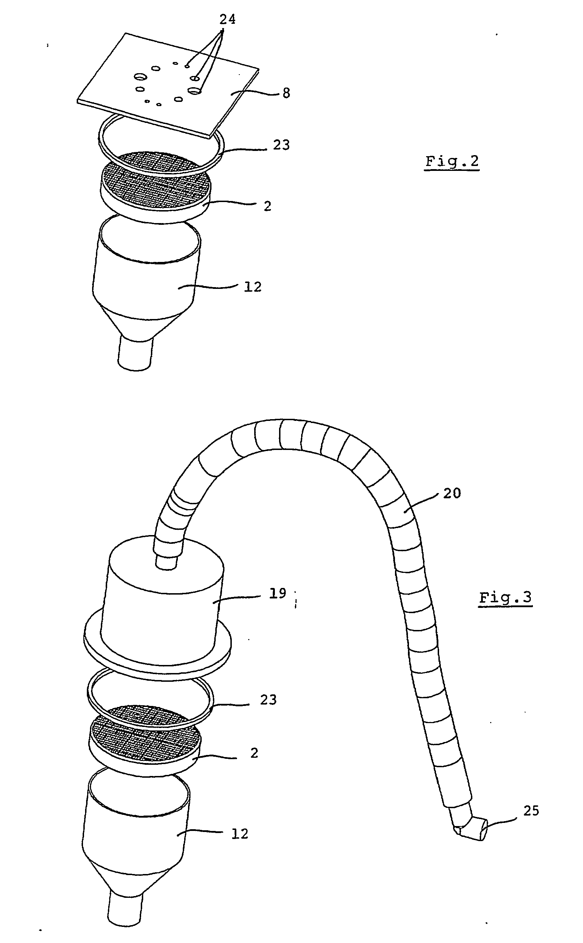

Fig. 3 shows a plastic cover 19 with sucking lead 20 made of a flexible hose with a terminal 25. The cover 19 may be fitted on the sucking strainer 12 and the sucking lead 20 serves for sucking remainders of contaminated pollen 1 that cannot be taken with the spoon 16 from the work board 14, which is useful for particularly rare pollen or pollen difficult to pick.

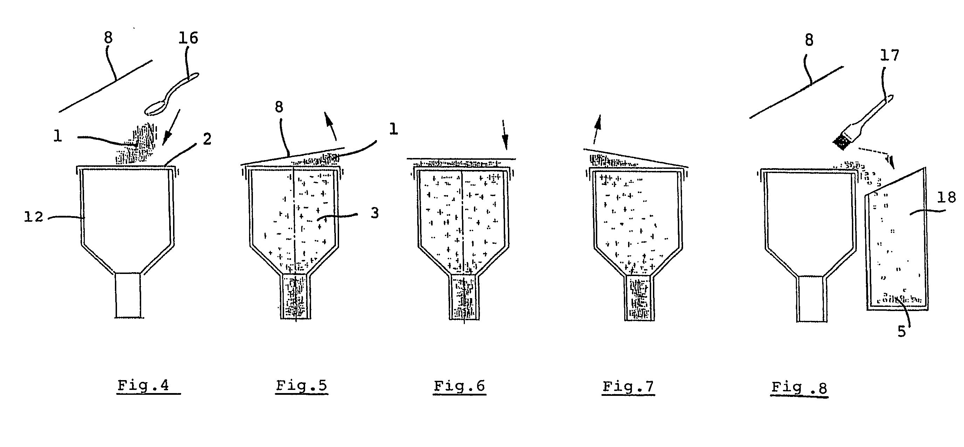

The low-pressure chamber 9 has always to be disinfected and all the tools washed and dried before cleaning. The operator has to be careful about slow balancing of pressure difference before entering the low-pressure chamber 9 to avoid fast air movement inside the low-pressure chamber 9. The contaminated pollen 1 on the work board 14 is first mixed and then heaped with the sweeping plate 15, and then ladled with the spoon 16 and after switching the sucking unit 7 it is put on the sieve 2. The throttle flap 8 is then put on the sieve 2 and its tilting from side to side as shown on Fig. 4 - 8 creates turbulent air flow speeding up the pass of the pollen through the sieve 2. The sieve 2 separates big mechanical dirt particles and further impurities 5, which stick on its surface because of their adhesiveness or electrostatic charge. The clean pollen 3 passes to the filter 6 from which it is regularly removed to the dose. The filter 6 consisting of a filter paper bag has a secondary separating function, as the undesirable particles that passed through the sieve 2 spin around inside the filter 6 and get stuck in the walls of filtering paper. It is thus necessary to roll the filters carefully after removing the clean pollen 3 and put them to waste. The sucking unit 7 has to be switched off as soon as contaminated pollen 1 gets through the sieve 2.

The dirt 5 that remains on the sieve 2 surface have to be removed by the brush 17 into the waste bin 18, and the whole process is repeated again. As greasy dirt 5 of some kinds of pollen stick heavily on the sieve 2, the sieve 2 has to be changed or washed during the cleaning process. At the final phase the cover 19 with the sucking lead 20 may be put on and the remaining pollen 1 from the work board 14 may be sucked and pass through the sieve 2. If the pollen 1 is too dirty the clean pollen 3 may be put back on the working board 14 and the whole cleaning process repeated.

The pollen cleaning method and device are applicable for cleaning pollen raw material for medicine manufacturing.

## Claims

1. A method of cleaning pollen from contaminants like mechanical impurities, spores and micro-organisms, wherein the contaminated pollen (1) is sucked to airflow through an insulant sieve (2), white the clean pollen particles (3) being non-conductive pass through the sieve and fall into a filter (6) where they are caught, and the contaminants (5) get the electrostatic charge and stick on the sieve (2).

2. The method of cleaning pollen according to Claim 1 wherein the amount of sucked contaminated pollen (1) and speed of its sucking to the air flow is regulated by a throttle flap (8) placed before the sieve (2).

3. A pollen cleaning device comprising a sucking unit (7) with a filter (6) wherein at least one insulant sieve (2) and at least one throttle flap (8) are arranged before the filter (6) input, the throttle valve being positioned upstream and adjacent to the sieve.

4. The device according to Claim 3 being arranged inside an underpressure chamber (9) equipped with an underpressure ventilator (10), while the outlet (11) of the sucking unit (7) is led outside the underpressure chamber (9).

5. The device according to Claim 3 wherein the sieve (2) is interchangeably fitted on the input of a vertical sucking strainer (12) led to the filter (6) and the throttle flap (8) consists of a perforated board touching the sieve (2).

6. The device according to Claim 5 wherein the perforation of the throttle flap (8) consists of circular or oval holes of different diameters arranged into a circle or an oval.

7. The device according to at least one of the Claims 3 through 6 wherein it moreover contains a heating board (13) on which a work board (14) for the contaminated pollen (1) is arranged, a sweeping plate (15), spoon (16) for ladling the contaminated pollen (1) and its application on the sieve (2), and a brush (17) with a dust bin (18) for removing dirt (5) from the sieve (2) surface.

8. The device according to at least one of the Claims 3 through 7 wherein it is equipped with a cover (19) fitting to the sucking strainer (12) with the sieve (2) and fitted with a sucking lead (20), for sucking remainders of contaminated pollen (1) from the work board (14).

## Patentansprüche

1. Verfahren zur Pollen-Reinigung von Verunreinigungen wie mechanische Verunreinigungen, Sporen und Mikroorganismen, **dadurch gekennzeichnet, dass** der verunreinigte Pollen (1) in einen Luftstrom über ein Sieb (2) aus Isolant eingesaugt wird, wobei die nicht leitenden Partikel des reinen Pollens (3) durch das Sieb kommen (2) und in einen Filter (6) durchfallen, wo sie aufgenommen werden, und die verunreinigten Stoffe (5) elektrostatisch aufgeladen werden und am Sieb (2) haften bleiben.

2. Verfahren zur Pollen-Reinigung nach dem Anspruch 1, **dadurch gekennzeichnet, dass** die Menge des eingesaugten verunreinigten Pollens (1) und die Geschwindigkeit seiner Ansaugung in die Luft mittels einer vor dem Sieb (2) angebrachten Drosselklappe (8) geregelt werden,

3. Eine Pollen-Reinigungsanlage, bestehend aus einer Saugeinheit (7) mit Filter (6), **dadurch gekennzeichnet, dass** vor dem Filtereingang (6) mindestens ein Sieb (2) aus Isolant und mindestens eine Drosselklappe (8) eingeordnet sind und das Drosselventil nach oben orientiert ist und an das Sieb (2) anliegt.

4. Eine Pollen-Reiningungsanlage nach dem Anspruch 3, **dadurch gekennzeichnet, dass** es in einer mit einem Unterdruckventilator (10) versehenen Unterdruckkammer (9) eingeordnete ist, wobei der Ausgang (11) der Saugeinheit (7) ausserhalb der Unterdruckkammer (9) ausgeführt ist.

5. Eine Pollen-Reinigungsanlage nach dem Anspruch 3, **dadurch gekennzeichnet, dass** das Sieb (2) austauschbar am Eingang des senkrecht angeordneten und in den Filter (6) mündenden Saugkorbes (12) angebracht ist und dass die Drosselklappe (8) aus einer perforierten, an das Sieb (2) anliegenden Platte besteht.

6. Eine Pollen-Reinigungsanlage nach dem Anspruch 5, **dadurch gekennzeichnet, dass** die Perforation der Drosselklappe (8) aus kreisförmigen, oder ovalförmigen Löchern mit verschiedenen Abmessungen besteht, welche kreisförmig, oder ovalförmig verteilt sind.

7. Eine Pollen-Reinigungsanlage nach mindestens einem der Ansprüche 3 bis 6, **dadurch gekennzeichnet, dass** es ferner eine Heizplatte (13) enthält, auf der eine Arbeitsplatte (14) für den verunreinigten Pollen (1), eine Abstreif-Vorrichtung (15), ein Löffel (16) fürs Löffeln des verunreinigten Pollens (1) und seine Aufbringung auf das Sieb (2) angeordnet ist, und ein Pinsel (17) mit Abfallbehälter (18) für Beseitigung von Verunreinigungen (5) aus der Oberfläche des Siebes (2).

8. Eine Pollen-Reinigungsanlage nach mindestens einem der Ansprüche 3 bis 7, **dadurch gekennzeichnet, dass** es mit einem auf den Saugkorb (12) mit dem Sieb (2) aufsetzbaren Deckel (19) ergänzt ist, der mit einer Saugleitung (20) für die Absaugung von Resten des verunreinigten Pollens (1) aus der Arbeitsplatte (14) versehen ist.

## Revendications

1. Procédé de purification de pollen des substances contaminées comme des impuretés mécaniques, des spores et des micro-organismes **caractérisé en ce que** le pollen (1) contaminé est aspiré par un courant d'air à travers une cagerotte isolante (2) par où les particules (3) pures de pollen étant diéléctriques passent et tombent sur un filtre (6) où elles sont retenues et les substances contaminées reçoivent une charge éléctrostatique et adhèrent sur la cagerotte (2).

2. Procédé de purification de pollen selon revendication 1 **caractérisé en ce que** le nombre de pollen (1) contaminé aspiré et la vitesse par laquelle il est aspiré par le courant d'air sont reglés par un clapet d'étranglement (8) positionné au avant la cagerotte (2).

3. Dispositif pour purification de pollen comprennant une unité d'aspiration (7) munie d'un filtre (6) **caractérisé en ce qu'**au moins une cagerotte (2) isolante et au moins un clapet d'étranglement (8) sont arrangés avant l'entrée du filtre (6) et une valve d'étranglement s'étend au dessus en touchant la cagerotte (2).

4. Dispositif selon la revendication 3 **caractérisé en ce que** le dispositif est arrangé dans une chambre à dépression (9) pourvue d'un ventilateur à dépression (10) où la sortie (11) de l'unité d'aspiration (7) est sortie à l'extérieur de la chambre à dépression (9).

5. Dispositif selon la revendication 3 **caractérisé en ce que** la cagerotte (2) est placée rechangeablement dans l'entrée du panier d'aspiration (12) arrangé verticalement et dégorgé dans le filtre (6) et le clapet d'étranglement (8) est formé par une planche perforée touchant la cagerotte (2).

6. Dispositif selon la revendication 5 **caractérisé en ce que** la perforation du clapet d'étranglement est formée par des trous circulaires ou ovales de différents diamètres, leur ensemble formant un circle ou un ovale.

7. Dispositif suivant l'une quelconque des revendications 3 à 6 **caractérisé en ce qu'**il comprend une plaque de chauffage (13) sur laquelle s'étend une planche de travail (14) pour le pollen (1) contaminé, un outil de ramassage (15), une cuillère (16) pour ramasser le pollen (1) contaminé et l'enduire sur la cagerotte (2) et un pinceau (17) avec une poubelle (18) pour enlever des impuretés (5) de la surface de la cagerotte (2).

8. Dispositif suivant l'une quelconque des revendications 3 à 7 **caractérisé en ce qu'**il est pourvu d'un couvercle (19) pour être monté sur le panier d'aspiration (12) avec la cagerotte (2) et ledit couvercle (19) est pourvu d'un conduit d'aspiration (20) pour aspirer les résidus du pollen (1) contaminé de la planche de travail (14).
